# EUROPEAN PATENT SPECIFICATION

(11) **EP 0 920 013 B1**
(45) Date of publication and mention of the grant of the patent: **28.03.2001**
(21) Application number: 97203670.1
(22) Date of filing: 25.11.1997
(51) Int. Cl.: G11B 27/00, G11B 27/031

(54) **A combined set for digital audio distribution**
Zusammenstellung zur digitalen Audioverteilung
Ensemble pour la distribution de données audio numériques

(43) Date of publication of application: 02.06.1999
(73) Proprietor: N.V. dZine, 8500 Kortrijk (BE)
(72) Inventor: Ghekiere, Dirk, 8500 Kortrijk (BE); Favorel, Johan, 8500 Kortrijk (BE)
(74) Representative: Quintelier, Claude

(56) References cited:
- EP-A- 0 626 793
- EP-A- 0 714 204
- EP-A- 0 756 279
- EP-A- 0 763 936
- WO-A-95/05050
- FR-A- 2 714 760
- US-A- 5 191 573
- US-A- 5 633 839

## Description

The present invention relates to a combined set for digital audio distribution comprising a carrier provided for storing digital audio files and a player comprising reading means provided for reading the digital audio files stored in the carrier.

Such a set is known on the Compact Disc (CD) - Audio market. The carrier is formed by an optical disc on which the audio data is digitally and filewise stored. The different songs or music each forming a file. In order to listen to the stored music, the user introduces the CD into the player which reads the stored files and converts them into analogue electrical signals. The latter being amplified and transformed into audible sound by means of a loudspeaker.

A drawback of the known sets for digital audio distribution is that the user has to buy either a CD comprising a plurality of preselected songs or a single CD comprising only two preselected songs, whereas he is only interested in a single song or a series of songs which are not on a same CD. That several songs are on one CD is due to the fact that the recording and manufacturing costs of a CD for a single song are too high It is also well known that music is easily copied for example on audio tapes, thus causing a loss of royalties for the songwriter and performer.

A known set for digital audio distribution is disclosed in document US-5.633.839 upon which the preamble of claim 1 is based.

It is an object of the present invention to provide a combined set for digital audio distribution which provides a larger selection possibility to the user, while at the same time limiting the copying facilities.

A combined set for digital audio distribution according to the present invention is therefore characterised in that said set further comprises a digital audio supply source and an access card, said digital audio supply source being provided with a first memory for mass storage of digital audio files, and said access card comprising a memory element wherein a first code word is stored, said first code word identifying a user of said player, said digital audio supply source comprises an encoder provided for reading said first code word from said access card and for filewise reading the audio files from said first memory, said encoder being provided for forming an encoded audio file by encoding by means of said first code word a file read from said first memory and for storing said encoded audio file on said carrier, said player comprises an access card reader provided for reading said first code word from said access card, said player further comprises a decoder connected to said card reader and said reading means and provided for decoding by means of said first code word the encoded audio files read from said carrier, said player comprises a second memory connected to said decoder and provided for storing the audio files decoded by said decoder. By filewise storing the audio into the supply source, the user can select those files i.e. those songs or music pieces which he desires and which not necessarily belongs to a same preselected plurality of songs. The user is thus no longer bound by the choice made by the producer or manufacturer of the CD. By encoding the audio files by means of the first code word and storing encoded audio files on the carrier, the encoded audio files can only be decoded by the player into which the access card is introduced. In such a manner the encoded audio files i.e. the music bought by the user, can only be played by a player into which the user has introduced his access card, which limits the copying facilities.

A first preferred embodiment of a combined set according to the present invention is characterised in that said digital audio files are stored in said first and second memory as compressed MPEG files. MPEG is a known audio data compression code which enables to reduce substantially the required memory capacity, without adversely affecting the sound quality.

A second preferred embodiment of a combined set according to the present invention is characterised in that at least one second code word is stored in said memory element of said access card, said second code word being also stored in a further memory element which belongs to said player, said access card comprising a comparison unit provided for comparing the second code word stored in the access card with the one read from the further memory element, said comparison unit being provided for enabling, respectively disabling said player upon a positive respectively a negative comparison result. This enables to limit further the copying facilities whereas the decoding of the audio file can only be performed with a player which has been enabled by the access card.

A third preferred embodiment of a combined set according to the present invention is characterised in that said encoder is provided for recursively encrypting said first code word by using the audio file to be encoded. Recursive encryption of the first code word by using the audio data, increases substantially the reliability of the encoding and decoding.

A fourth preferred embodiment of a combined set according to the present invention is characterised in that said audio file to be encoded is divided in sub-files, said encoder respectively decoder being provided for applying said encoding respectively decoding on a predetermined number of bytes of each sub-file. This accelerates the encoding and decoding without affecting the reliability thereof.

The invention will now be described in more details with reference to the drawings illustrating a preferred embodiment of a combined set for digital audio distribution.

In the drawings:
figure 1 illustrates schematically a combined set according to the present invention;
figure 2 illustrates schematically the hardware embedded in the access card;
figure 3 illustrates the code words stored in the access card;
figure 4 shows by way of a block diagram the construction of the supply source; and
figure 5 shows by way of a block diagram the construction of the player.

In the drawings a same reference sign has been assigned to a same or analogous element.

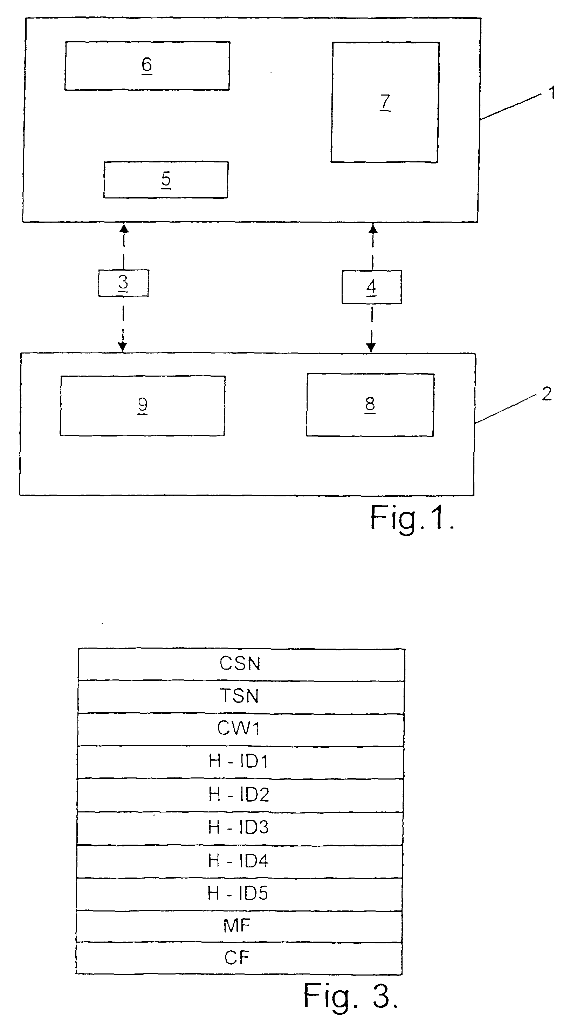

A combined set for digital audio distribution as illustrated in figure 1 comprises a digital audio supply source 1, a player 2, an access card 3, and a carrier 4. The audio supply source comprises a first read - write interface 5, provided for executing read and write operations on the access card 3. Preferably the first read-write interface forms a closed entity, such as for example a credit card reader, which limits the possibility of an unauthorised access. The audio supply source further comprises a first mass storage memory 6, provided for filewise storing digital audio files. Each file comprises either a single song, music or vocal piece or a complete symphony or opera piece. A digital music file here signifies that set of bytes which on an audio carrier forms an entity. Preferably the audio files are stored in a compressed format such as MPEG 1 (Motion Picture Expert Group) layer 2, which allows a factor 6 compression and enables in such a manner to store a large quantity of digital music. The audio supply source 1 further comprises a write member 7, provided for writing audio files on the carrier 4.

The player 2 comprises a read interface 9, provided for executing read operations on the access card 3. The player also comprises a read member 8, provided for reading the digital audio data stored on the carrier 4.

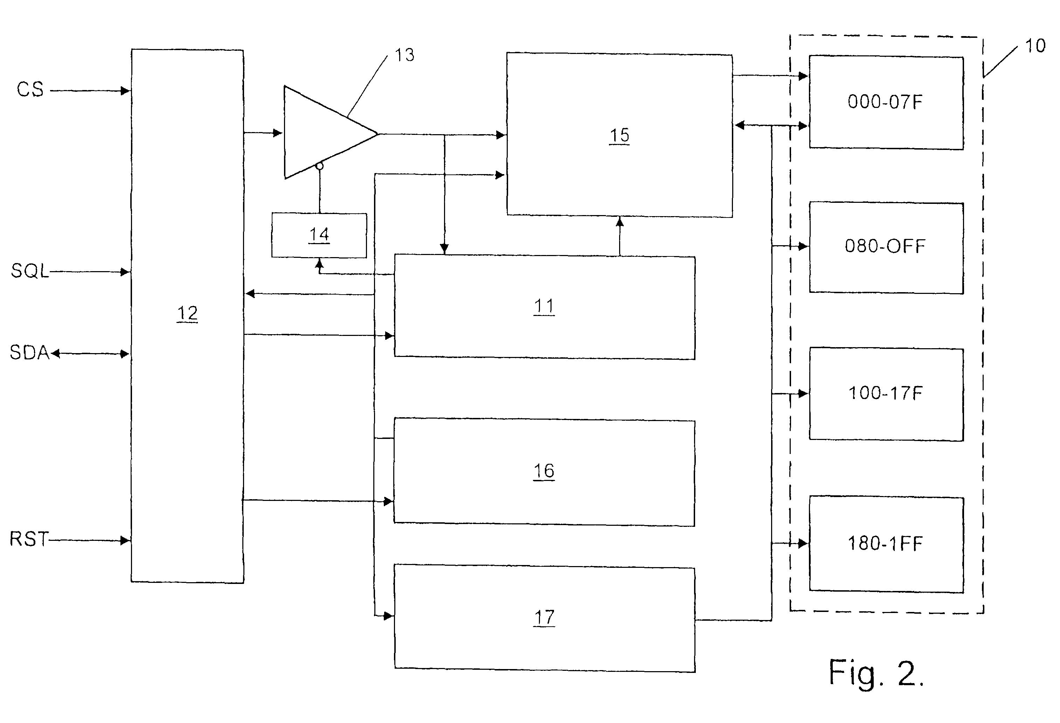

The access card 3 is formed by a smart card and comprises a memory element 10, for example formed by an EEPROM and verification logic 11, as is illustrated in figure 2. The access card has four connection pins, namely a CS (chip select), an SQL (serial clock), SDA (serial data) and a reset line RST, which are connected to an interface logic 12. The CS input is connected via an EX OR (exclusive OR) gate 13 to a processor 15. The data supplied on the SDA connection is transmitted to the verification logic 11 or comparison unit, which has an output connected to an enabling input of the processor 15. The verification logic 11 only enables the processor 15 if a positive verification result is established. The verification operation executed by the verification logic will be explained hereinafter. Each time that the verification logic establishes a negative result, a counter 14 is incremented. When counter 14 has reached a predetermined value, a flag is output and supplied at EX OR gate 13, causing the CS transmission to the processor 15 to be blocked, and thus neutralising the access card. In such a manner the access card is protected against repetitive attempts applied by an unauthorised user. The access card further comprises two registers 16 and 17.

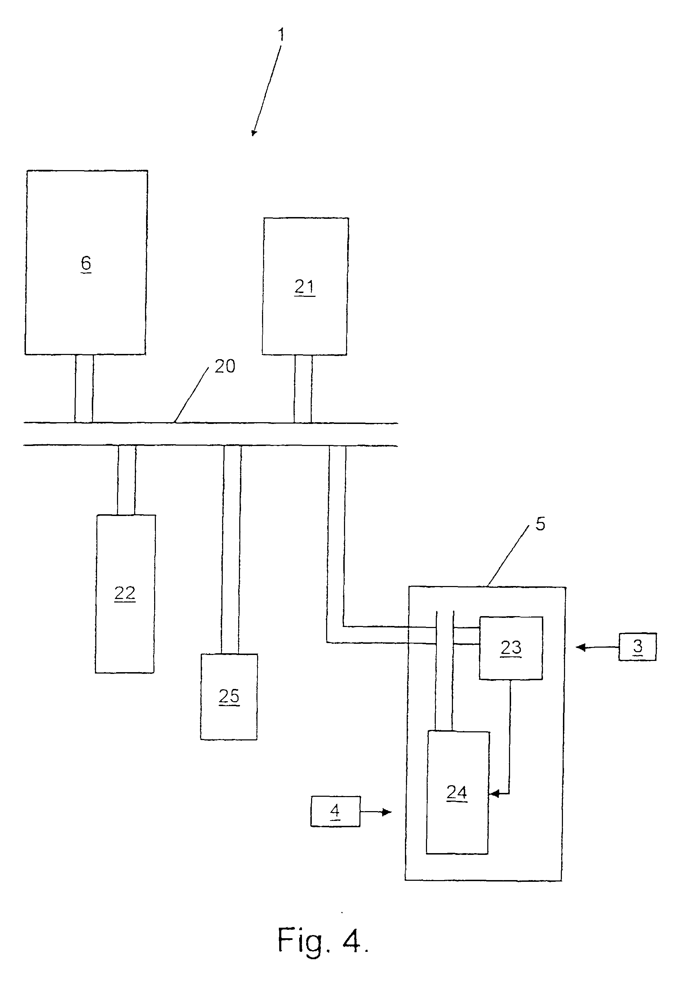

The main purpose of the access card 3 as a component of the combined set according to the present invention, is to store code words identifying the user or proprietor of the player, enabling the encoding and decoding of the files stored on the carrier and to enable or disable, as the case may be, the operation of the player. For that purpose a series of code words are stored in the memory element 10 of the access card. Figure 3 illustrates the code words stored in that memory element.

The access card 3 stores a first code word CW1, for example a 6 bytes code word, which identifies the user or proprietor of the player. To every user or customer is assigned a unique first code word. That first code word is written into the access card at the manufacturing stage of the player, and is also stored in a further memory element of the player. The first code word is used to encode the audio files to be stored on the carrier and to decode the stored encoded audio files when introduced into the player. This encoding and decoding operation will be described hereinafter.

The access card 3 stores a second code word H-ID1, for example a 6 bytes code word, which is written into field F1 of the access card when the player is bought and corresponds to the unique serial number of the player. The serial number of the player is also stored in a further memory element of the player. In such a manner the operation of the player will only be enabled if the access card comprises a second code word H-ID1 corresponding to the serial number of the player in which the access card is inserted. To that purpose the serial number of the player is fed to the access card upon introduction of the access card in the read-write interface 9 of the player. If the verification logic 11 of the card establishes correspondence between H-ID1 and the serial number of the player, the processor 15 of the access card is enabled, if not, the processor is not enabled and the access card is neutralised which causes the player not to operate. In such a manner the player can only be used if the appropriate access card is introduced. This feature limits the possibility of copying the audio files, since the audio files stored in the player can only be plaid by that player into which the appropriate access card was introduced.

In order to enable a same user to have several players, for example one in the living room, at least one for the children and one in each car of the family, the access card comprises four additional fields F2-F5. In each field an additional second code word H-ID2 → 5 can be written. Suppose the user has two players, one in his living room and one in his car. The one in the living room respectively the car has serial number XA respectively XB. Then serial number XA respectively XB is written into H-ID1 respectively H-ID2. In such a manner the same access card can enable both players. Each time the user acquires an additional player, he asks the shop-keeper who sells him the additional player, to write the serial number of that additional player into the access card of the player(s) he already possesses and to write the serial number(s) of the player(s) he already possesses into the access card of the additional player. The serial number of the player can not be copied to another player as it is hardwired into the player.

The access card 3 further stores a card serial number CSN which is unique for every card, and comprises for example 6 bytes. The CSN allows the manufacturer to track channels through which the card is sold and enables thus to establish illegal copying as the number is unique. The CSN has no influence on the security of the player and is introduced by the manufacturer. The access card also comprises a Terminal Serial Number (TSN) which is the serial number of the first read-write interface 5 which did the last update of the access card. This TSN is only used for control purpose and has also no influence on the security of the system. The TSN is thus rewritten each time that the first read-write interface performs an operation with the access card.

The access card further comprises a Mode Field MF of for example 1 byte and a Checksum Field CF of for example 2 bytes. The Mode Field indicates the rights available with the access card. Some cards will only allow to play back, while other will allow playback and record. The Checksum Field is provided for error detection of the data stored in the memory of the card.

Each of the fields in the memory of the access card are protected by passwords which are stored into the access card. So for example the CSN is read and write protected by a first password which remains within the card and is never presented to the connection pins of the card when introduced into the first or second read-write interface. The other fields are read protected by a second password and write protected by a third password. The second password is known by the player and is presented to the card when the player wants to read data stored into the card. The third password is known by the first read-write interface and is presented to the card when that interface wants to write data into the access card. The check applied on the password is performed by the verification logic 11 of the access card. By the use of the passwords the card is protected against unauthorised read or write. The card is also provided with delay means which enable a verification operation only after the lapse of a predetermined time after following a preceding verification operation. This is for example realised by a counter receiving the SQL and initialised by the end of a verification operation. The verification logic is then disabled during the time period that the counter counts. When the counter has reached his preset value it enables again the verification logic. In such a manner repetitive attempts by an unauthorised user are made less attractive.

Figure 4 shows schematically the set-up of the audio supply source 1 as part of the combined set according to the present invention. The supply source comprises the first mass memory 6 for example formed by a series of optical discs forming a background memory. In that memory the audio files of a large amount of different music are filewise stored. The mass memory is connected to a transfer bus 20 to which a processor 21 and a processing memory are also connected. The processing memory stores the necessary software for having the source operating. The first read-write interface 5 is also connected to the bus 20. The interface 5 comprises a card read-write member 23 and an encoder 24. A keyboard and/or touch screen 25 is also connected to the bus 20.

The operation of the audio supply source will now be described by means of an example. Suppose the user wants to buy the following songs:
1. "Sailing" of Rod Stewart
2. "Night calls" of Joe Cocker
3. "Don't Stop" of Fleetwood Mac
Clearly those three songs do not belong to a same album neither to a compilation album. The digital audio files of each of those songs are stored in the mass memory 6. Beside the necessary bytes for producing the music, the audio file of each song also comprises further identifying data such as the title of the song and the performer, the title of the album from which the song is issued, the year at which the song is issued and the type of music (ballads, rock, classic etc.).

The user presents his access card 3 to the first read-write interface 5, where the card is read and the verification based on the third password is performed. If the third password is recognised by the card, the latter is enabled and the read-write member 23 reads the first code word CW1 which is then supplied to the encoder 24. The user or the shop-keeper then introduces the three requested songs by means of the keyboard 25.

Under control of the processor 21, the audio files of these three songs are then read from the first memory 6 where they are stored. An error message is issued if one of the requested songs would not be stored into the mass memory. The audio files of the three selected songs are sequentially fed to the encoder 24 via the bus 20. In the encoder 24 each audio file is encoded by means of the first code word CW1 read from the access card. In such a manner the audio file is encoded in a unique manner and can only be decoded if the first code word is known, thus substantially reducing the copying facilities. The encoded audio files of the selected songs are then written onto the carrier 4 by means of a writing member which is part of the encoder. The carrier is for example formed by a hard disc or by a floppy disc.

An example of the encoding using the first code word will now be described hereunder. Each audio file is divided into a number of sub-files, each comprising for example 64 K bytes. At recording time, 100 bytes of each sub-file are encoded, while the remaining bytes are not encoded. Of course the choice of 100 bytes is only a choice and other alternatives are possible. So it would be possible to encode the whole file or more or less than 100 bytes. However the selection of 100 bytes has proven to provide a satisfactory result as this leads to pops and clicks approximately every two seconds if the encoded file would be plaid without decoding. The frequency at which the pops and clicks are produced renders the music inaudible. Increasing the number of bytes to be encoded would thus require more encoding time without increasing the reliability of the protection.

The 100 bytes of each 64 K sub-files to be encoded are bytewise coded, each time with one byte of the first code word. Suppose now that audio byte A°1 = 00011011 and code word byte C°1 = 11010001. In a first step the LSB (least significant bits) of C°1 are added to the MSB (most significant bits) of A°1 resulting in A°1→MA1 = 00101011. The MSB of MA1 now indicates the number of cyclic rotations to be performed on MA1, in the present case thus 4 rotations have to be performed leading to MA1→A¹1=10110010. A similar encoding is applied on C°1 where the LSB of A¹1 are added to the MSB of C°1 in order to obtain MC1 whose MSB indicates the cyclic rotations to be applied for obtaining C¹1. After obtaining A¹1 and C¹1 a similar encoding operation is applied on byte A¹1 with the second byte C°2 of the first code word. This operation then issues A²1 and C¹2. The same operation is repeated with the remaining 4 bits i.e. C°3, C°4, C°5, and C°6 of the first code word, leading to the following bytes A³1, A⁴1, A⁵1, A⁶1 and C¹3, C¹4, C¹5, C¹6. The thus obtained byte A⁶1 which originates from audio byte A°1 is now stored on the carrier as encoded music byte.

The second byte A°2 of the 100 bytes issued from the audio file is now encoded by using the encoded first code word C¹1, C¹2, ...., C¹6. The encoding of A°2 with the encoded first code word now furnished A⁶2 and C²1, C²2,... C²6. This operation is repeated with the subsequent 98 bytes of the audio file so as to obtain an encoded audio file : A⁶1, A⁶2, A⁶3, ... , A⁶99, A⁶100 and an encoded code word C¹⁰⁰1, C¹⁰⁰2, ... , C¹⁰⁰6.
A recursive encryption of the audio file is thus obtained. In order to be able to decode the encrypted 100 bytes the encoded code word C¹⁰⁰1, C¹⁰⁰2, ... , C¹⁰⁰6 is also stored in the carrier.

By the described encoding, the first code word which is unique as it belongs to the access card, is encoded by means of the audio file. This signifies that the first code word evolves in function of the stored music file. As the music file is also encoded with a changing first code word, there is a mutual evolution of the first code word and the encoded music file during the encoding process. A unique encoding is thus obtained which can only be decoded if the access card comprising the first code word used for encoding and the carrier with the encrypted code word C¹⁰⁰1, C¹⁰⁰2, ... , C¹⁰⁰6 is used. Decoding of the encoded music file without knowing the first code word and its encrypted version is thus practically impossible.

In the described encoding A°1 and C°1 had a same number of bits. This choice is however not the only possibility and the encoding could also be realised if A°1 and C°1 would each have a different number of bits. Also the described example of encoding was only given by way of example, whereas other alternatives are possible involving other mathematical operations than the addition of LSB and MSB, such as for example a subtraction or cyclic rotation in an other direction. It is however important that the encoding is reversible in such a manner that upon decoding the original audio file is restored. Mathematical operations such as divisions leading to approximate values are less preferred as they could lead to deformation of the music file upon decoding.

The encoded music files comprising the music choice of the user are stored on the carrier by means of the first read-write interface 5. The audio supply source also stores in a separate memory, which is for i example part of processing memory 22, identifiers of the music files which were selected by the user and stored on the carrier. In the present example the identifying data necessary to identify the three selected songs are also stored in that separate memory. The purpose of storing those identifying data is to provide a tool which enables to calculate and pay the necessary copy rights for the songs which the user has bought.

Once the selected music files are stored on the carrier the user can introduce the carrier and his access card into the player in order to listen the music he bought.

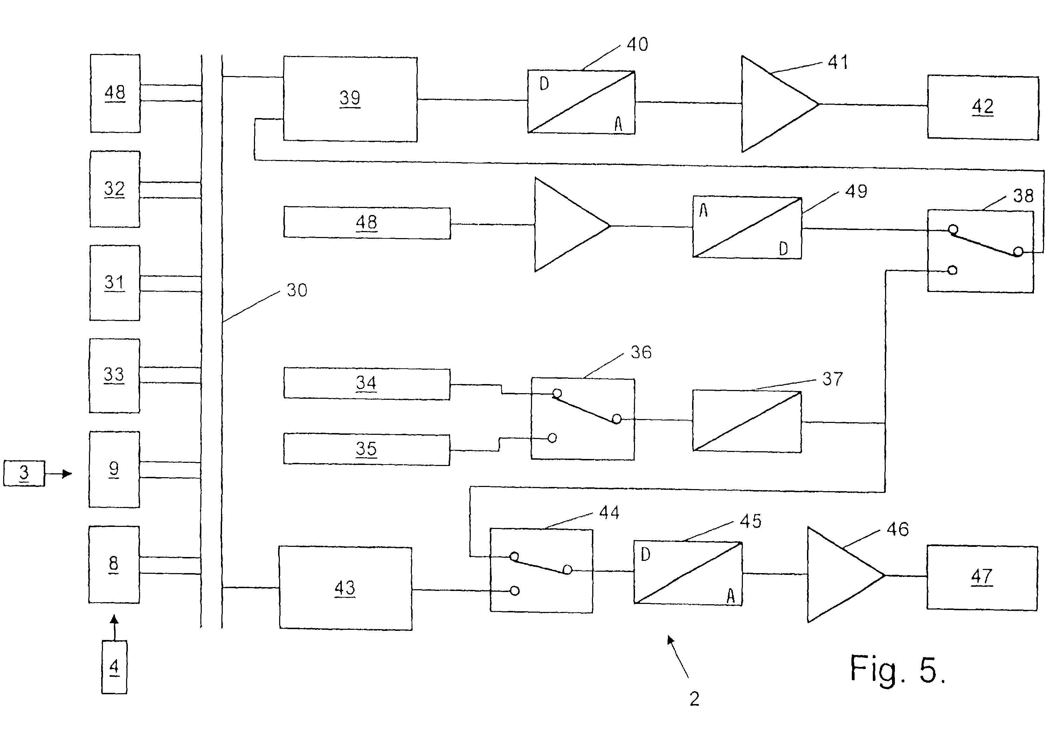

Figure 5 shows schematically an example of electronic circuitry of the player 2. The player comprises a processor bus 30 to which a processor 31, a processing memory 31, a hard disc unit 33, the read member 8 and the read interface 9 are connected. An encoder-decoder 39 provided for decoding the encoded audio files is also connected to the processor bus 30. The encoder-decoder 39 is also provided for encoding audio files, which enables the user to encode his own audio files, for example music he possesses on vinyl long-playing records or the like. Optionally the player comprises a second decoder 43 also connected to the processor bus. This second decoder is only provided for decoding the audio files.

The player 2 further comprises a CD-digital input 34 to which the digital signal output from a CD player can be supplied. An external digital input 35 is also provided to which the signal output from for example a DAT (digital audio type) can be fed. Inputs 34 and 35 are each connected to a separate input of a first selector 36, which is controlled by a user selector (not shown) operated by the user and enabling the latter to select the source input. An output of the first selector 36 is connected to an input of a converter 37 provided for demodulating the input digital signal according to a known CD demodulation protocol which converts the signal into a I²S signal.

The player also comprises an analogue input 48 for supplying an analogue audio signal. Input 48 is connected to an analogue/digital (AID) converter 49, whose output is connected to a first input of a second selector 38 also controlled by the user selector. A second input of the second selector 38 is connected to an output of the first selector 37. An output of the second selector connected to an input of the encoder-decoder 39. A digital audio signal either directly input via inputs 34 or 35 or converted by A/D converter 49 is thus supplied to the encoder-decoder 39 in order to be encoded according to the encoding protocol of the set. An output of the encoder-decoder 39 is connected to a D/A converter, which output is supplied via an amplifier 41 to a headphone 42.

The second encoder is connected to a second input of a third selector, whose first input is connected to the output of the converter 37. The third selector is also controlled by the user selector. An output of the third selector is connected via a D/A converter 45, an amplifier 46 to a stereo line out 47.

The user having bought the requested music introduces the carrier 4 into the read member 8 and the access card 3 into the read interface 9. Under control of the processor the second code word H-ID1 hard-wired in the player is read and fed to the access card, where by means of the verification logic 11 the hard-wired second code word of the player is compared with the one stored in the access card. Only if both second code words match, the processor of the card is enabled. If not the processor of the card is disabled and the first code word can not be read which makes decoding of the stored audio files impossible. Of course alternative protections are possible and the check on the second code words could also be performed by the processor 31 of the player.

When the hard-wired second code word of the player matches with the one of the card, the first code word is read in the access card and fed to the encoder-decoder 39 and decoder 43. The decoding operation can then be started and will be performed either by the decoder 39 or 43 depending on the configuration mode of the player. The encoded audio files stored in the carrier 4 are then read by the read member 8 and supplied via the processor bus 30 to the decoder performing the decoding .

For decoding, the first code word and the encoded code word read from the carrier, are used. During decoding, the encoding process is reversely applied in order to obtain the original audio file. After decoding the decoded audio file is supplied via the processor bus 30 to the hard disc memory 33 where the audio files are stored.

When the user now wants to listen to a music, he enters the requested songs by means of an interface 48 connected to the processor bus and for example formed by a keyboard or a touch screen. Under control of the processor 31 the selected music is read from the mass memory and fed to the encoder-decoder 39 or to decoder 43 which are also provided to convert the audio files.

Since the identifying data are also stored in the hard disc, the latter can be used by the user to make selections based on different criteria such as for example "rock music of the sixties", "ballads", "opera music of Wagner" etc.. The retrieval of the files stored in the hard disc is then made by using the identifying data.

## Claims

1. A combined set for digital audio distribution comprising a carrier (4) provided for storing digital audio files and a player (2) comprising reading means (8) provided for reading the digital audio files stored in the carrier, said set further comprising a digital audio supply source (1) and an access card (3), said digital audio supply source being provided with a first memory (6) for mass storage of digital audio files, and said access card comprising a memory element wherein a first code word (CW1) is stored, said first code word identifying a user of said player characterized in that said digital audio supply source comprises an encoder (5,7) provided for reading said first code word from said access card and for filewise reading the audio files from said first memory, said encoder being provided for forming an encoded audio file by encoding, by means of said first code word, a file read from said first memory and for storing said encoded audio file on said carrier, and said player comprises an access card reader (9) provided for reading said first code word from said access card, said player further comprises a decoder connected to said card reader and said reading means and provided for decoding by means of said first code word (CW1) the encoded audio files read from said carrier, said player comprises a second memory connected to said decoder and provided for storing the audio files decoded by said decoder.

2. A combined set as claimed in claim 1, characterised in that said digital audio files are stored in said first and second memory as compressed MPEG files.

3. A combined set as claimed in claim 1 or 2, characterised in that at least one second code word is stored in said memory element of said access card, said second code word being also stored in a further memory element which belongs to said player, said access card comprising a comparison unit provided for comparing the second code word stored in the access card with the one read from the further memory element, said comparison unit being provided for enabling, respectively disabling said player upon a positive respectively a negative comparison result.

4. A combined set as claimed in anyone of the claims 1 to 3, characterised in that said encoder is provided for recursively encrypting said first code word by using the audio file to be encoded.

5. A combined set as claimed in claim 4, characterised in that said audio file to be encoded is divided in sub-files, said encoder respectively decoder being provided for applying said encoding respectively decoding on a predetermined number of bytes of each sub-file.

6. A combined set as claimed in any one of the preceding claims, characterised in that said carrier is a hard disc.

7. A combined set as claimed in any one of the preceding claims, characterised in that said first code word is read and write protected by a password.

## Patentansprüche

1. Kombinierte Anordnung zur digitalen Audio-Verteilung, mit einem Träger (4) zum Speichern digitaler Audio-Dateien und einem Abspielgerät (2) mit einer Lesevorrichtung (8) zum Lesen der auf dem Träger gespeicherten digitalen Audio-Dateien, wobei die Anordnung ferner eine digitale Audio-Zuführquelle (1) und eine Zugriffskarte (3) aufweist, wobei die digitale Audio-Zuführquelle mit einem ersten Speicher (6) zur massenweisen Speicherung digitaler Audio-Dateien versehen ist und die Zugriffskarte ein Speicherelement aufweist, in dem ein erstes Code-Wort (CW1) gespeichert ist, das einen Benutzer des Abspielgeräts identifiziert,
dadurch gekennzeichnet, dass die digitale Audio-Zuführquelle einen Kodierer (5,7) zum Lesen des ersten Code-Wortes aus der Zugriffskarte und zum dateiweisen Lesen der Audio-Dateien aus dem ersten Speicher aufweist, wobei der Kodierer dazu vorgesehen ist, eine kodierte Audio-Datei zu bilden, indem er mittels des ersten Code-Wortes eine aus dem ersten Speicher gelesene Datei kodiert, und die kodierte Audio-Datei auf dem Träger zu speichern, und wobei die Abspielvorrichtung einen Zugriffskartenleser (9) zum Lesen des ersten Code-Wortes aus der Zugriffskarte aufweist, die Abspielvorrichtung ferner einen Dekodierer aufweist, der mit dem Kartenleser und der Lesevorrichtung verbunden ist und dazu vorgesehen ist, mittels des ersten Code-Wortes (CW1) die aus dem Träger gelesenen kodierten Audio-Dateien zu lesen, und die Abspielvorrichtung einen zweiten Speicher aufweist, der mit dem Dekodierer verbunden ist und zum Speichern der mittels des Dekodierers dekodierten Audio-Dateien vorgesehen ist.

2. Kombinierte Anordnung nach Anspruch 1, dadurch gekennzeichnet, dass die digitalen Audio-Dateien als komprimierte MPEG-Dateien in dem ersten und dem zweiten Speicher gespeichert werden.

3. Kombinierte Anordnung nach Anspruch 1 oder 2, dadurch gekennzeichnet, dass mindestens ein zweites Code-Wort in dem Speicherelement der Zugriffskarte gespeichert ist, wobei das zweite Code-Wort ferner in einem weiteren Speicherelement gespeichert ist, das der Abspielvorrichtung zugehört, wobei die Zugriffskarte eine Vergleichseinheit zum Vergleichen des in der Zugriffskarte gespeicherten zweiten Code-Wortes mit dem aus dem weiteren Speicherelement gelesenen Code-Wort aufweist, wobei die Vergleichseinheit zum Aktivieren bzw. Deaktivieren der Abspielvorrichtung auf ein positives bzw. ein negatives Vergleichsergebnis hin vorgesehen ist.

4. Kombinierte Anordnung nach einem der Ansprüche 1 bis 3, dadurch gekennzeichnet, dass der Kodierer dazu vorgesehen ist, das erste Code-Wort mittels der zu kodierenden Audio-Datei rekursiv zu verschlüsseln.

5. Kombinierte Anordnung nach Anspruch 4, dadurch gekennzeichnet, dass die zu kodierende Audio-Datei in Unterdateien unterteilt ist, wobei der Kodierer bzw. der Dekodierer dazu vorgesehen ist, die Kodierung bzw. Dekodierung an einer vorbestimmten Anzahl von Bytes jeder Unterdatei vorzunehmen.

6. Kombinierte Anordnung nach einem der vorhergehenden Ansprüche, dadurch gekennzeichnet, dass der Träger eine Festplatte ist.

7. Kombinierte Anordnung nach einem der vorhergehenden Ansprüche, dadurch gekennzeichnet, dass das erste Code-Wort durch ein Password lese- und schreibgeschützt ist.

## Revendications

1. Ensemble pour la distribution de données audio numériques comprenant un support (4) prévu pour stocker des fichiers audio numériques et un lecteur (2) comprenant des moyens de lecture (8) prévus pour lire les fichiers audio numériques stocker sur le support, ledit ensemble comprenant en outre une source d'approvisionnement (1) audio numérique et une carte d'accès (3), ladite source d'approvisionnement audio numérique étant pourvue d'une première mémoire (6) pour le stockage en masse de fichiers audio numériques, et ladite carte d'accès comprenant un élément de mémoire dans lequel un premier mot de code (CW1) est stocké, ledit premier mot de code identifiant un utilisateur dudit lecteur, caractérisé en ce que ladite source d'approvisionnement audio numérique comprend un codeur (5, 7) pour lire ledit premier mot de code de ladite carte d'accès et pour lire par fichier les fichiers audio de ladite première mémoire, ledit codeur étant prévu pour former un fichier audio codé en codant, au moyen dudit premier mot de code, un fichier lu dans ladite première mémoire et pour stocker ledit fichier audio codé sur ledit support, et ledit lecteur comprend un lecteur (9) de cartes d'accès prévu pour lire ledit premier mot de code de ladite carte d'accès, ledit lecteur comprend en outre un décodeur connecté audit lecteur de cartes et auxdits moyens de lecture et prévu pour décoder au moyen dudit premier mot de code (CW1) les fichiers audio codés lus sur le support, ledit lecteur comprend une deuxième mémoire connectée audit décodeur et prévue pour stocker les fichiers audio décodés par ledit décodeur.

2. Ensemble selon la revendication 1, caractérisé en ce que lesdits fichiers audio numériques sont stockés dans ladite première et deuxième mémoire comme des fichiers MPEG compressés.

3. Ensemble selon la revendication 1 ou 2, caractérisé en ce qu'au moins un deuxième mot de code est stocké dans ledit élément de mémoire de ladite carte d'accès, ledit deuxième mot de code étant aussi stocké dans un autre élément de mémoire qui fait partie dudit lecteur, ladite carte d'accès comprenant une unité de comparaison prévue pour comparer le deuxième mot de code stocké dans la carte d'accès avec celui lu dans l'autre élément de mémoire, ladite unité de comparaison étant prévue respectivement pour valider ou invalider ledit lecteur à la suite d'un résultat de comparaison positif ou négatif

4. Ensemble selon une quelconque des revendications 1 à 3, caractérisé en ce que ledit codeur est prévu pour crypter de manière récursive ledit premier mot de code en utilisant le fichier audio à coder.

5. Ensemble selon la revendication 4, caractérisé en ce que ledit fichier audio à coder est divisé en sous-fichiers, ledit codeur ou décodeur étant prévu pour appliquer ledit codage ou décodage à un nombre prédéterminé d'octets de chaque sous-fichier.

6. Ensemble selon une quelconque des revendications précédentes, caractérisé en ce que ledit support est un disque dur.

7. Ensemble selon une quelconque des revendications précédentes, caractérisé en ce que ledit premier mot de code est lu et protégé en écriture par un mot de passe.
